# EUROPEAN PATENT SPECIFICATION

(11) **EP 3 683 104 B1**
(45) Date of publication and mention of the grant of the patent: **23.09.2026**
(21) Application number: 18855422.4
(22) Date of filing: 27.04.2018
(51) Int. Cl.: B60S 5/06, B60L 53/36, B60L 53/80

(54) **BATTERY CHANGING PLATFORM FOR ELECTRIC VEHICLE**
BATTERIEWECHSELPLATTFORM FÜR ELEKTROFAHRZEUG
PLATE-FORME DE CHANGEMENT DE BATTERIE POUR VÉHICULE ÉLECTRIQUE

(30) Priority: 12.09.2017 CN 201710819403
(43) Date of publication of application: 22.07.2020
(73) Proprietor: Nio Co., Ltd., Shanghai 201804 (CN)
(72) Inventor: BENGTSSON, Jan, Jiading Shanghai 201804 (CN); LI, Nan, Jiading Shanghai 201804 (CN); TIAN, Xiaotao, Jiading Shanghai 201804 (CN); DING, Xikun, Jiading Shanghai 201804 (CN); MA, Yongyue, Jiading Shanghai 201804 (CN)
(74) Representative: Vossius & Partner Patentanwälte Rechtsanwälte mbB
(86) International application number: PCT/CN2018/084889
(87) International publication number: WO 2019/052191

(56) References cited:
- CN-A- 103 950 431
- CN-A- 103 950 431
- CN-A- 106 891 865
- CN-A- 106 891 865
- CN-B- 103 921 772
- CN-B- 105 059 266
- CN-U- 203 937 637
- CN-U- 203 937 637
- CN-U- 205 951 929
- CN-U- 206 436 985
- CN-U- 206 436 985
- US-A1- 2015 307 068
- US-A1- 2015 307 068

## Description

### Technical Field

The invention relates to the technical field of battery swapping for electric vehicles, and in particular to a battery swap platform for an electric vehicle.

### Background Art

Electric vehicles are means of transportation that can be driven by electric energy stored in batteries, and thus reduce the vehicle's dependence on fossil fuels. The electric vehicle is an important measure to solve the national energy security problem. Traction batteries are the core of electric vehicles, but the range provided by a traction battery per charge is far from being comparable to that of a traditional means of transportation. Therefore, how to replenish the traction battery quickly and conveniently with electric energy becomes an important factor in the use and promotion of the electric vehicles, but in the current battery charging technology, charging cannot be completed in a few minutes just like refueling. Hence, battery swapping becomes the only possible way to replenish the electric vehicles with electric energy.

At present, a battery swap platform for an electric vehicle requires a vehicle to be firstly located on the battery swap platform and then a battery swap trolley to be driven to an exact battery swap position, in order to achieve accurate swapping of a battery pack. In the prior art, a four-column hoister is often used to position the vehicle, which runs through a ramp with a certain width and a long plate to a set position. However, such a positioning method has significant errors and may easily lead to wrong entry, and the demand on the driver's driving experience is extremely high. If the vehicle runs to an incorrect position, it needs to be adjusted continuously to the correct battery swap position before the battery pack can be swapped. Moreover, the positioning accuracy is low, the time for positioning is long, so the user experience is poor.

CN 203 937 637 U relates to a positioning platform for replacing a plurality of types of electric vehicle batteries.

CN 206 436 985 U relates to a chassis type electric power station for electric vehicle.

The invention is defined by independent claim 1. Further embodiments of the invention are defined by the dependent claims.

### Summary of the Invention

The technical problem to be solved by the invention is to provide a battery swap platform for an electric vehicle, which can quickly and accurately position an incoming vehicle and can ensure that the vehicle enters the battery swap platform smoothly and steadily, thereby improving the user experience.

To solve the aforementioned technical problem, the invention provides a battery swap platform for an electric vehicle, provided that a travelling direction is an X-direction and a vehicle width direction is a Y-direction,
the battery swap platform comprises: an X-direction positioning unit and a Y-direction positioning unit, wherein
the X-direction positioning unit is used to determine a stop position in the X-direction for an incoming vehicle; and
the Y-direction positioning unit is used for adjusting the positions of front wheels and of rear wheels in the Y-direction so as to perform positioning in the Y-direction.

Further, the X-direction positioning unit comprises grooves for supporting wheels, and the incoming vehicle is determined to be in the stop position in the X-direction when the wheels enter the grooves.

Further, the Y-direction positioning unit comprises a front-wheel Y-direction positioning unit and a rear-wheel Y-direction positioning unit respectively disposed at positions corresponding to the front wheels and the rear wheels of the vehicle, wherein
the front-wheel Y-direction positioning unit comprises a front-wheel push rod motor and front-wheel push rods disposed at two ends of the front-wheel push rod motor in the Y-direction, the front-wheel push rod motor is used to drive the front-wheel push rods to move, and the front-wheel push rods are used to push the front wheels to move, so as to position the front wheels in the Y-direction; and
the rear-wheel Y-direction positioning unit comprises a rear-wheel push rod motor and rear-wheel push rods disposed at two ends of the rear-wheel push rod motor in the Y-direction, the rear-wheel push rod motor is used to drive the rear-wheel push rods to move, and the rear-wheel push rods are used to push the rear wheels to move, so as to position the rear wheels in the Y-direction.

Further, the battery swap platform further comprises first roller holders, each of which comprises a plurality of first rollers arranged side by side, and the first rollers are provided in the grooves and are used for supporting a wheel entering the corresponding groove, the first rollers being axially parallel to the X-direction and capable of rolling with the movement in the Y-direction of the wheel in the corresponding groove.

Further, each of the grooves comprises a first groove sidewall and a second groove sidewall which are arranged in the X-direction, wherein the first groove sidewall and the second groove sidewall form a V-shaped included angle, and each of the groove sidewalls is provided with the first roller holder.

Further, the battery swap platform further comprises second roller holders, each of which comprises a plurality of second rollers arranged side by side for supporting a wheel entering the second roller holder, the second rollers being axially parallel to the X-direction and capable of rolling with the movement in the Y-direction of the wheel.

Further, the battery swap platform further comprises a ramp structure disposed at one end or two ends, in the X-direction, of the battery swap platform and used for supporting the vehicle to enter or exit the battery swap platform.

Further, the ramp structure comprises a ramp body and a spindle, and the ramp body is connected to the battery swap platform via the spindle and is turned around the spindle such that the ramp structure is folded or deployed.

Further, at least one end portion, in the X-direction, of the battery swap platform further comprises guide rods for guiding the vehicle to enter or exit the battery swap platform; the guide rods are disposed at two sides, in the Y-direction, of the end portion, and
each of the guide rods comprises a first rod portion and a second rod portion which are arranged in the X-direction and connected to each other, the first rod portion being closer to the end portion than the second rod portion; and
an opening expanding towards the end portion is formed between the first rod portions at two sides of the end portion.

Further, the battery swap platform further comprises a guide rail and a rack which are embedded in the battery swap platform, wherein the guide rail is used for providing a travelling track for a battery swap trolley to enter or exit the battery swap platform and determining a driving direction of the battery swap trolley; and
the rack is used to mesh with a gear on the battery swap trolley to control the moving distance of the battery swap trolley.

Further, both the guide rail and the rack are parallel to the Y-direction.

Further, the battery swap platform further comprises a control module, and the control module comprises:
a ramp structure control unit for controlling the ramp structure into a folded state or a deployed state;
an electric motor control unit for controlling the operating states of the front-wheel push rod motor and the rear-wheel push rod motor; and
a battery swap trolley control unit for controlling an entry position of the battery swap trolley.

The invention further provides a battery swap system comprising the battery swap platform and a battery swap trolley.

The invention has obvious advantages and beneficial effects as compared with the prior art. By means of the aforementioned technical solution, a battery swap platform for an electric vehicle according to the invention can achieve considerable technical progress and practicability and has a wide range of industrial utility value. The invention has at least the following advantages:
(1) the invention has a simple structure, and can achieve quick and accurate positioning, and adjust the position of the vehicle to locate the vehicle in a preset battery swap position, saving on the time for battery swapping, increasing the accuracy and efficiency of battery swapping, and improving the user experience;
(2) the battery swap platform can precisely position the battery swap trolley, so that the battery swap trolley can enter the battery swap platform smoothly and accurately, further increasing the accuracy and efficiency of battery swapping;
(3) the ramp structure can be in a folded state and a deployed state, reducing the space occupied by the battery swap platform;
(4) the gap portions between the components of the battery swap platform are filled with a fiber-reinforced plastic grille, which not only ensures the smooth entry of the vehicle into the battery swap platform, but also reduces the weight of the battery swap platform.

The aforementioned description is only an overview of the technical solutions of the invention. In order to clearly understand the technical means of the invention, the invention can be implemented according to the contents of the description; and in order to make the aforementioned and other objects, features and advantages of the invention more obvious and understandable, preferred embodiments are described in detail below with reference to the accompanying drawings.

### Brief Description of the Drawings

Fig. 1 is a schematic diagram of a battery swap platform for an electric vehicle provided in an embodiment of the invention.
Fig. 2 is a schematic diagram of a ramp structure, in a folded state, of the battery swap platform for an electric vehicle provided in an embodiment of the invention.
Fig. 3 is an enlarged view of A in Fig. 1.
Fig. 4 is an enlarged view of B in Fig. 1.

### [Description of Symbols]

| | | | | | |
|---|---|---|---|---|---|
| 1: | X-direction positioning unit | 2: | Y-direction positioning unit | 3: | First roller holder |
| 4: | Second roller holder | 5: | Ramp structure | 6: | Guide rod |
| 7: | Guide rail | 8: Rack | 11: | Groove | |
| 111: | First groove sidewall | 112: | Second groove sidewall | | |
| 21: | Front-wheel Y-direction positioning unit | 22: | Rear-wheel Y-direction positioning unit | | |
| 211: | Front-wheel push rod motor | 212: | Front-wheel push rod | | |
| 221: | Rear-wheel push rod motor | 222: | Rear-wheel push rod | | |
| 31: | First roller | 41: | Second roller | | |
| 51: | Ramp body | 52: | Spindle | | |
| 61: | First rod portion | 62: | Second rod portion | | |

### Detailed Description of Embodiments

In order to further illustrate the technical means used to achieve the intended purpose of the invention and the technical effects thereof, the implementation of a battery swap platform for an electric vehicle proposed in the invention and the effects thereof are described in detail hereinafter in conjunction with the accompanying drawings and the preferred embodiments.

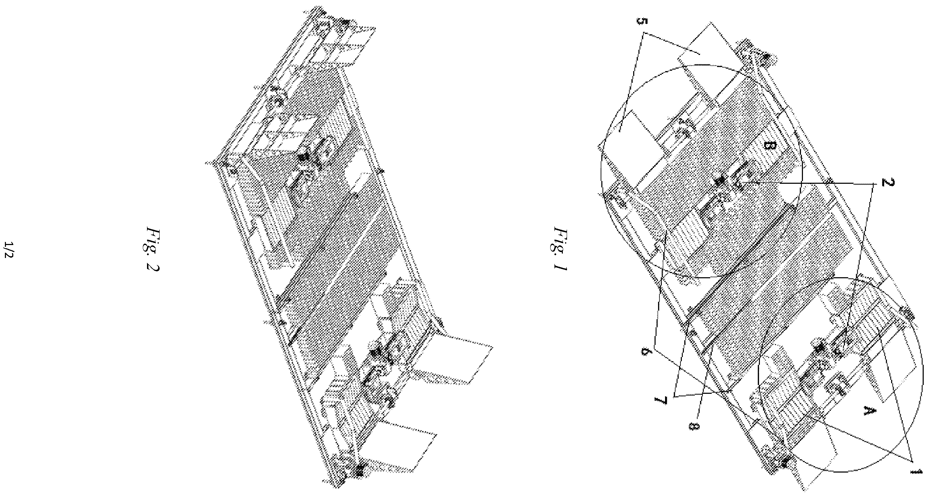

The invention provides a battery swap platform for an electric vehicle. As shown in Fig. 1 and Fig. 2, provided that a travelling direction is an X-direction and a vehicle width direction is a Y-direction, the battery swap platform comprises: an X-direction positioning unit 1 and a Y-direction positioning unit 2. The X-direction positioning unit 1 is used to determine a stop position in the X-direction for an incoming vehicle; and the Y-direction positioning unit 2 is used for adjusting the positions of front wheels and of rear wheels in the Y-direction so as to perform positioning in the Y-direction.

The term "electric vehicle" in the invention generally refers to a vehicle having a swappable battery pack, and is not limited to only a battery electric vehicle, and may also be a hybrid vehicle.

Individual components of the battery swap platform are described respectively in detail as follows:

### Positioning unit

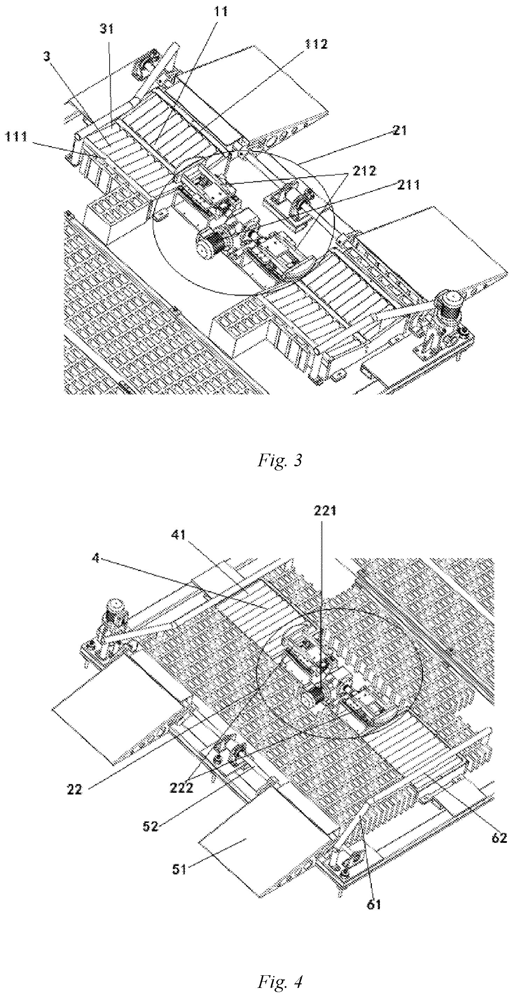

As shown in Fig. 3 and Fig. 4, the X-direction positioning unit 1 comprises grooves 11 for support wheels, which may be the front wheels or the rear wheels. The incoming vehicle is determined to be in the stop position in the X-direction when the wheels enter the grooves 11.

In an example of the accompanying drawings of the invention, a description will be given with the X-direction positioning unit 1 being used for supporting the front wheels of the vehicle. The Y-direction positioning unit 2 comprises a front-wheel Y-direction positioning unit 21 and a rear-wheel Y-direction positioning unit 22 respectively disposed at positions corresponding to the front wheels and the rear wheels of the vehicle. The front-wheel Y-direction positioning unit 21 comprises a front-wheel push rod motor 211 and front-wheel push rods 212 disposed at two ends of the front-wheel push rod motor 211 in the Y-direction. The front-wheel push rod motor 211 is used to drive the front-wheel push rods 212 to move. The front-wheel push rods 212 are used to push the front wheels to move, so as to position the front wheels in the Y-direction. The rear-wheel Y-direction positioning unit 22 comprises a rear-wheel push rod motor 221 and rear-wheel push rods 222 disposed at two ends of the rear-wheel push rod motor 221 in the Y-direction. The rear-wheel push rod motor 212 is used to drive the rear-wheel push rods 222 to move. The rear-wheel push rods 222 are used to push the rear wheels to move, so as to position the rear wheels in the Y-direction.

The battery swap platform adjusts the vehicle entering the battery swap platform into a preset battery swap position by means of the X-direction positioning unit 1 and the Y-direction positioning unit 2.

### Roller holder

As shown in the example of Fig. 3, the battery swap platform further comprises first roller holders 3, each of which comprises a plurality of first rollers 31 arranged side by side, and the first rollers are provided in the grooves 11 and are used for supporting a wheel entering the corresponding groove 11, the first rollers 31 being axially parallel to the X-direction and capable of rolling with the movement in the Y-direction of the wheel in the corresponding groove 11, so as to reduce the frictional force between the wheel and a platform contact surface.

The groove 11 comprises a first groove sidewall 111 and a second groove sidewall 112 distributed in the X-direction. The first groove sidewall 111 and the second groove sidewall 112 form a V-shaped included angle, which preferably ranges from 120° to 150°.

Each of the groove sidewalls is provided with the first roller holder 3.

The battery swap platform further comprises a second roller holder 4. The first roller holder 2 and the second roller holder 4 are distributed in the X-direction, one of which is used for supporting the front wheels of the vehicle, and the other is used for supporting the rear wheels. The second roller holder 4 comprises a plurality of second rollers 41 arranged side by side for supporting a wheel entering the second roller holder 4, the second rollers 41 being axially parallel to the X-direction and capable of rolling with the movement in the Y-direction of the wheel, so as to reduce the frictional force between the wheel and a platform contact surface.

It should be noted that the first roller holders 3 and the second roller holders 4 are used for bearing the wheels. During adjusting the positions of the wheels, by rolling the rollers, the frictional force between the wheels and the platform contact surface can be reduced, which facilitates the adjustment of the positions of the front wheels and the rear wheels of the vehicle, and therefore the battery swap efficiency is improved. In addition, the distance between the two first roller holders 3 in the Y-direction and the distance between the two second roller holders 4 in the Y-direction can be set in accordance with specific requirements, such as models of vehicles usually required for battery swapping. The distance between the two first roller holders 3 in the Y-direction and the distance between the two second roller holders 4 in the Y-direction can be set in a range suitable for most vehicles, such that the battery swap platform can be applied to more than one vehicle model.

### Ramp structure

The battery swap platform further comprises a ramp structure 5, and the ramp structure 5 is disposed at one end or two ends, in the X-direction, of the battery swap platform and is used for supporting the vehicle to enter or exit the battery swap platform.

As shown in Fig. 4, the ramp structure 5 comprises a ramp body 51 and a spindle 52, and the ramp body 51 is connected to the battery swap platform via the spindle 52 and is turned around the spindle 52 such that the ramp structure 5 is folded or deployed.

Specifically, referring to Fig. 1, the ramp structure 5 at least comprises the following setting modes:
In Mode one, a ramp structure 5 is provided at one end of the battery swap platform in the X-direction, and no ramp structure is provided at the other end, wherein the vehicle forwardly enters the battery swap platform by means of the ramp structure 5 during the battery swapping, and backwardly exits the battery swap platform by means of the ramp structure 5 after the battery swapping is completed.

In Mode two, a ramp structure is provided at one end of the battery swap platform in the X-direction, and no ramp structure is provided at the other end, wherein the vehicle backwardly enters the battery swap platform by means of the ramp structure 5 during the battery swapping, and forwardly exits the battery swap platform by means of the ramp structure 5 after the battery swapping is completed.

In Mode 3, two ends of the battery swap platform in the X-direction are provided with a ramp structure 5 respectively, and the battery swapping can be performed by selecting any vehicle entry or exit mode of Mode 1 and Mode 2.

In accordance with factors, such as specific usage requirements, driving preferences, and occupied area, the ramp structure 5 is set by selecting any of the aforementioned modes. The ramp structure 5 can be in a folded state or in a deployed state, and the ramp structure 3 can be folded after the battery swapping is completed, as shown in Fig. 2, thereby further reducing the occupied area of the battery swap platform.

The ramp structure 5 can be an integral ramp which two wheels can enter simultaneously, and can be provided as a configuration of two identical ramp structures 5, in which each ramp structure 5 can perform the entry of one wheel, and the two ramp structures 5 are arranged side by side in the vehicle width direction for two front wheels or two rear wheels to enter or exit the battery swap platform. Preferably, an angle formed between the ramp structures 5 and ground ranges from 10° to 30°. More preferably, the angle between the ramp structures 5 and the ground ranges from 10° to 20°. Within this range, vehicles can be further ensured to enter the battery swap platform smoothly.

### Guide rod

At least one end portion, in the X-direction, of the battery swap platform further comprises guide rods 6 for guiding the vehicle to enter or exit the battery swap platform. The guide rods 6 are disposed at two sides, in the Y-direction, of the end portion.

As shown in Fig. 4, each of the guide rods 6 comprises a first rod portion 61 and a second rod portion 62 which are arranged in the X-direction and connected to each other. The first rod portion 61 is closer to the end portion than the second rod portion 62.

An opening expanding towards the end portion is formed between the first rod portions 61 at two sides of the end portion.

As an example, the length of the guide rod 6 is at least 1/5 of the length of the battery swap platform in the X-direction. The guide rod 6 at each side may also be disposed through two sides of the entire battery swap platform in the X-direction.

It should be noted that the ramp structure 5 and the guide structure 6 are arranged in pairs and are used in combination. One end, where the ramp structure 5 is provided, is correspondingly provided with the guide structure 6. During the vehicle entering the battery swap platform, the driver can see the ramp structure 5 and the guide structure 6 so that the vehicle entry direction can be determined.

### Guide rail and rack

The battery swap platform further comprises a guide rail 7 and a rack 8. The guide rail 7 and the rack 8 are embedded in the battery swap platform, and are in the same plane as the battery swap platform, so as to ensure rolling stability and high control precision of the vehicle, which can further reduce the time for battery swapping. The guide rail 7 and the rack 8 are both located in a region, corresponding to a battery pack at a vehicle chassis during battery swapping of the vehicle, of the battery swap platform. The guide rail 7 is used for providing a travelling track for a battery swap trolley to enter or exit the battery swap platform and determining a driving direction of the battery swap trolley. The rack 8 is used to mesh with a gear on the battery swap trolley to control the moving distance of the battery swap trolley. The guide rail 7 and the rack 8 are disposed to improve the precision in the moving direction and distance of the battery swap trolley, thereby further improving the precision and efficiency of battery swapping.

As an embodiment, both the guide rail 7 and the rack 8 are parallel to the Y-direction. The battery swap platform comprises two guide rails 7. The rack 8 is disposed between the two guide rails 7.

### Control module

The battery swap platform further comprises a control module (not shown in the figure), and the control module comprises:
a ramp structure control unit for controlling the ramp structure into a folded state or a deployed state;
an electric motor control unit for controlling the operating states of the front-wheel push rod motor and the rear-wheel push rod motor; and
a battery swap trolley control unit for controlling an entry position of the battery swap trolley.

As an embodiment, the gap portions between the components of the battery swap platform are filled with a fiber-reinforced plastic grille, which not only ensures the smooth entry of the vehicle into the battery swap platform, but also reduces the weight of the battery swap platform.

The invention further comprises a battery swap system. The battery swap system comprises the battery swap platform of the invention and a battery swap trolley.

Based on the aforementioned battery swap system, the battery swapping process includes:
In Step 1, before the vehicle enters, the ramp structure 5 is controlled such that same deploys automatically.

In Step 2, when the vehicle enters, the travelling direction is determined according to the positions of the ramp structure 5 and the guide structure 6, and the vehicle is controlled such that same enters the battery swap platform.

In Step 3, when the vehicle enters the first roller holders 3, the vehicle is controlled such that same stops, and the positioning of the vehicle in the X-direction is completed by means of the first roller holders 3.

In Step 4, the front-wheel push rods 212 and the rear-wheel push rods 222 are controlled to be simultaneously pushed out to respectively act on a front axle and a rear axle of the vehicle, and when the front-wheel push rods 212 and the rear-wheel push rods 222 are in the preset positions, the positioning of the vehicle in the Y-direction is completed, and the front-wheel push rods 212 and the rear-wheel push rods 222 are controlled to return to initial positions simultaneously.

In Step 5, the battery swap trolley is controlled such that same enters the battery swap position to swap the battery pack for the vehicle.

In Step 6, after the battery swapping is completed, the vehicle exits the battery swap platform, and the ramp structure 5 is controlled such that same is folded, completing the battery swapping.

The embodiments of the invention provide a battery swap platform for an electric vehicle, a battery swap system and a battery swap method. The battery swap platform has a simple structure, can achieve quick and accurate positioning, and can precisely adjust the position of the vehicle to locate the vehicle in the preset battery swap position, saving on the time for battery swapping, and increasing the accuracy and efficiency of battery swapping. The battery swap platform can also precisely position the battery swap trolley, so that the battery swap trolley can enter the battery swap platform smoothly and accurately, further increasing the accuracy and efficiency of battery swapping; In addition, the ramp structure may be in a folded state or a deployed state, thereby reducing the space occupied by the battery swap platform. The gap portions between the components of the battery swap platform are filled with a fiber-reinforced plastic grille, which not only ensures the smooth entry of the vehicle into the battery swap platform, but also reduces the weight of the battery swap platform. The invention can meet various requirements of users, save time for the users and improve the user experience.

## Claims

1. A battery swap platform for an electric vehicle, wherein:
provided that a travelling direction is a X-direction and a vehicle width direction is a Y-direction,
the battery swap platform comprises: a X-direction positioning unit (1) and a Y-direction positioning unit (2),
the X-direction positioning unit (1) is used to determine a stop position in the X-direction for an incoming vehicle;
the Y-direction positioning unit (2) is used for adjusting the positions of front wheels and of rear wheels of the incoming vehicle in the Y-direction so as to perform positioning in the Y-direction;
the X-direction positioning unit (1) comprises grooves (11) for supporting wheels, and the incoming vehicle is determined to be in the stop position in the X-direction when the wheels enter the grooves (11);
the Y-direction positioning unit (2) comprises a front-wheel Y-direction positioning unit (21) and a rear-wheel Y-direction positioning unit (22) respectively configured to be disposed at positions between the front wheels and between the rear wheels of the vehicle,
the front-wheel Y-direction positioning unit (21) comprises a front-wheel push rod motor (211) and front-wheel push rods (212) disposed at two ends of the front-wheel push rod motor (211) in the Y-direction, the front-wheel push rod motor (211) is used to drive the front-wheel push rods (212) to move, and the front-wheel push rods (212) are used to push the front wheels to move, so as to position the front wheels in the Y-direction; and
the rear-wheel Y-direction positioning unit (22) comprises a rear-wheel push rod motor (221) and rear-wheel push rods (222) disposed at two ends of the rear-wheel push rod motor (221) in the Y-direction, the rear-wheel push rod motor (221) is used to drive the rear-wheel push rods (222) to move, and the rear-wheel push rods (222) are used to push the rear wheels to move, so as to position the rear wheels in the Y-direction.

2. The battery swap platform for an electric vehicle according to claim 1, **characterized in that**
the battery swap platform further comprises first roller holders (3), each of which comprises a plurality of first rollers (31) arranged side by side, and the first rollers (31) are provided in the grooves (11) and are used for supporting a wheel entering the corresponding groove (11), the first rollers (31) being axially parallel to the X-direction and capable of rolling with the movement in the Y-direction of the wheel in the corresponding groove (11).

3. The battery swap platform for an electric vehicle according to claim 2, **characterized in that**
each of the grooves (11) comprises a first groove sidewall (111) and a second groove sidewall (112) which are arranged in the X-direction, wherein the first groove sidewall (111) and the second groove sidewall (112) form a V-shaped included angle, and each of the groove sidewalls (111; 112) is provided with the first roller holder (3).

4. The battery swap platform for an electric vehicle according to claim 1, **characterized in that**
the battery swap platform further comprises second roller holders (4), each of which comprises a plurality of second rollers (41) arranged side by side for supporting a wheel entering the second roller holder (4), the second rollers (41) being axially parallel to the X-direction and capable of rolling with the movement in the Y-direction of the wheel.

5. The battery swap platform for an electric vehicle according to claim 1, **characterized in that**
the battery swap platform further comprises a ramp structure (5) disposed at one end or two ends, in the X-direction, of the battery swap platform and used for supporting the vehicle to enter or exit the battery swap platform.

6. The battery swap platform for an electric vehicle according to claim 5, **characterized in that**
the ramp structure (5) comprises a ramp body (51) and a spindle (52), and the ramp body (51) is connected to the battery swap platform via the spindle (52) and is turned around the spindle (52) such that the ramp structure (5) is folded or deployed.

7. The battery swap platform for an electric vehicle according to claim 1, **characterized in that**
at least one end portion, in the X-direction, of the battery swap platform further comprises guide rods (6) for guiding the vehicle to enter or exit the battery swap platform; the guide rods (6) are disposed at two sides, in the Y-direction, of the end portion, and
each of the guide rods (6) comprises a first rod portion and a second rod portion which are arranged in the X-direction and connected to each other, the first rod portion being closer to the end portion than the second rod portion; and
an opening expanding towards the end portion is formed between the first rod portions at two sides of the end portion.

8. The battery swap platform for an electric vehicle according to claim 5, **characterized in that**
the battery swap platform further comprises a guide rail (7) and a rack (8) which are embedded in the battery swap platform, wherein the guide rail (7) is used for providing a travelling track for a battery swap trolley to enter or exit the battery swap platform and determining a driving direction of the battery swap trolley; and
the rack (8) is used to mesh with a gear on the battery swap trolley to control the moving distance of the battery swap trolley.

9. The battery swap platform for an electric vehicle according to claim 8, **characterized in that**
both the guide rail (7) and the rack (8) are parallel to the Y-direction.

10. The battery swap platform for an electric vehicle according to claim 5, **characterized in that**
the battery swap platform further comprises a control module, and the control module comprises:
a ramp structure control unit for controlling the ramp structure (5) into a folded state or a deployed state;
an electric motor control unit for controlling the operating states of the front-wheel push rod motor (211) and the rear-wheel push rod motor (221); and
a battery swap trolley control unit for controlling an entry position of the battery swap trolley.

11. A battery swap system comprising the battery swap platform according to any one of claims 1-10 and a battery swap trolley.

## Patentansprüche

1. Batteriewechselplattform für ein Elektrofahrzeug, wobei:
vorausgesetzt, dass eine Fahrtrichtung eine X-Richtung ist und eine Fahrzeugbreitenrichtung eine Y-Richtung ist, die Batteriewechselplattform umfasst: eine X-Richtungs-Positioniereinheit (1) und eine Y-Richtungs-Positioniereinheit (2),
die X-Richtungs-Positioniereinheit (1) dazu verwendet wird, eine Stoppposition in X-Richtung für ein einfahrendes Fahrzeug zu bestimmen;
die Y-Richtungs-Positioniereinheit (2) dazu verwendet wird, die Positionen der Vorderräder und Hinterräder des einfahrenden Fahrzeugs in Y-Richtung anzupassen, um eine Positionierung in Y-Richtung durchzuführen;
die X-Richtungs-Positioniereinheit (1) Rillen (11) zum Tragen von Rädern umfasst, und bestimmt wird, dass sich das einfahrende Fahrzeug in der Stoppposition in X-Richtung befindet, wenn die Räder in die Rillen (11) einfahren;
die Y-Richtungs-Positioniereinheit (2) eine Vorderrad-Positioniereinheit (21) in Y-Richtung und eine Hinterrad-Positioniereinheit (22) in Y-Richtung umfasst, die jeweils dazu ausgelegt sind, an Positionen zwischen den Vorderrädern bzw. den Hinterrädern des Fahrzeugs angeordnet zu werden,
wobei die Vorderrad-Positioniereinheit (21) in Y-Richtung einen Vorderrad-Schubstangenmotor (211) und Vorderrad-Schubstangen (212) umfasst, die an zwei Enden des Vorderrad-Schubstangenmotors (211) in Y-Richtung angeordnet sind, wobei der Vorderrad-Schubstangenmotor (211) dazu verwendet wird, die Vorderrad-Schubstangen (212) zum Bewegen anzutreiben, und wobei die Vorderrad-Schubstangen (212) dazu verwendet werden, die Vorderräder zum Bewegen zu drücken, um die Vorderräder in Y-Richtung zu positionieren; und
wobei die Hinterrad-Positioniereinheit (22) in Y-Richtung einen Hinterrad-Schubstangenmotor (221) und Hinterrad-Schubstangen (222) umfasst, die an zwei Enden des Hinterrad-Schubstangenmotors (221) in Y-Richtung angeordnet sind, wobei der Hinterrad-Schubstangenmotor (221) dazu verwendet wird, die Hinterrad-Schubstangen (222) zum Bewegen anzutreiben, und wobei die Hinterrad-Schubstangen (222) dazu verwendet werden, die Hinterräder zum Bewegen zu drücken, um die Hinterräder in Y-Richtung zu positionieren.

2. Batteriewechselplattform für ein Elektrofahrzeug nach Anspruch 1, **dadurch gekennzeichnet, dass**
die Batteriewechselplattform ferner erste Rollenhalter (3) umfasst, von denen jeder eine Mehrzahl erster nebeneinander angeordneter Rollen (31) umfasst, und die ersten Rollen (31) in den Rillen (11) vorgesehen sind und dazu verwendet werden, ein in die entsprechende Rille (11) einfahrendes Rad zu tragen, wobei die ersten Rollen (31) achsparallel zur X-Richtung verlaufen und mit der Bewegung des Rads in der entsprechenden Rille (11) in Y-Richtung rollen können.

3. Batteriewechselplattform für ein Elektrofahrzeug nach Anspruch 2, **dadurch gekennzeichnet, dass**
jede der Rillen (11) eine erste Rillenseitenwand (111) und eine zweite Rillenseitenwand (112) umfasst, die in X-Richtung angeordnet sind, wobei die erste Rillenseitenwand (111) und die zweite Rillenseitenwand (112) einen V-förmigen eingeschlossenen Winkel bilden, und jede der Rillenseitenwände (111; 112) mit dem ersten Rollenhalter (3) versehen ist.

4. Batteriewechselplattform für ein Elektrofahrzeug nach Anspruch 1, **dadurch gekennzeichnet, dass**
die Batteriewechselplattform ferner zweite Rollenhalter (4) umfasst, von denen jeder eine Mehrzahl zweiter nebeneinander angeordneter Rollen (41) umfasst, zum Tragen eines in den zweiten Rollenhalter (4) einfahrenden Rads, wobei die zweiten Rollen (41) achsparallel zur X-Richtung verlaufen und mit der Bewegung des Rads in Y-Richtung rollen können.

5. Batteriewechselplattform für ein Elektrofahrzeug nach Anspruch 1, **dadurch gekennzeichnet, dass**
die Batteriewechselplattform ferner eine Rampenstruktur (5) umfasst, die an einem Ende oder an zwei Enden der Batteriewechselplattform in X-Richtung angeordnet ist und dazu verwendet wird, das Fahrzeug beim Einfahren in die oder Ausfahren aus der Batteriewechselplattform zu tragen.

6. Batteriewechselplattform für ein Elektrofahrzeug nach Anspruch 5, **dadurch gekennzeichnet, dass**
die Rampenstruktur (5) einen Rampenkörper (51) und eine Spindel (52) umfasst, und der Rampenkörper (51) über die Spindel (52) mit der Batteriewechselplattform verbunden ist und um die Spindel (52) gedreht wird, sodass die Rampenstruktur (5) eingeklappt oder ausgeklappt wird.

7. Batteriewechselplattform für ein Elektrofahrzeug nach Anspruch 1, **dadurch gekennzeichnet, dass**
mindestens ein Endabschnitt der Batteriewechselplattform in X-Richtung ferner Führungsstangen (6) umfasst, zum Führen des Fahrzeugs beim Einfahren in die oder Ausfahren aus der Batteriewechselplattform; wobei die Führungsstangen (6) an zwei Seiten des Endabschnitts in Y-Richtung angeordnet sind, und
jede der Führungsstangen (6) einen ersten Stangenabschnitt und einen zweiten Stangenabschnitt umfasst, die in X-Richtung angeordnet und miteinander verbunden sind, wobei der erste Stangenabschnitt näher am Endabschnitt angeordnet ist als der zweite Stangenabschnitt; und
zwischen den ersten Stangenabschnitten an zwei Seiten des Endabschnitts eine sich zum Endabschnitt hin erweiternde Öffnung gebildet ist.

8. Batteriewechselplattform für ein Elektrofahrzeug nach Anspruch 5, **dadurch gekennzeichnet, dass**
die Batteriewechselplattform ferner eine Führungsschiene (7) und eine Zahnstange (8) umfasst, die in die Batteriewechselplattform eingebettet sind, wobei die Führungsschiene (7) dazu verwendet wird, eine Fahrspur für einen Batteriewechselwagen zum Einfahren in die oder Ausfahren aus der Batteriewechselplattform bereitzustellen und eine Fahrtrichtung des Batteriewechselwagens zu bestimmen; und
die Zahnstange (8) dazu verwendet wird, mit einem Zahnrad am Batteriewechselwagen in Eingriff zu stehen, um die Bewegungsdistanz des Batteriewechselwagens zu steuern.

9. Batteriewechselplattform für ein Elektrofahrzeug nach Anspruch 8, **dadurch gekennzeichnet, dass**
sowohl die Führungsschiene (7) als auch die Zahnstange (8) parallel zur Y-Richtung verlaufen.

10. Batteriewechselplattform für ein Elektrofahrzeug nach Anspruch 5, **dadurch gekennzeichnet, dass**
die Batteriewechselplattform ferner ein Steuermodul umfasst, und das Steuermodul umfasst:
eine Rampenstruktur-Steuereinheit zum Steuern der Rampenstruktur (5) in einen eingeklappten Zustand oder einen ausgeklappten Zustand;
eine Elektromotor-Steuereinheit zum Steuern der Betriebszustände des Vorderrad-Schubstangenmotors (211) und des Hinterrad-Schubstangenmotors (221); und
eine Batteriewechselwagen-Steuereinheit zum Steuern einer Einfahrposition des Batteriewechselwagens.

11. Batteriewechselsystem, umfassend die Batteriewechselplattform nach einem der Ansprüche 1 bis 10 und einen Batteriewechselwagen.

## Revendications

1. Plate-forme d'échange de batterie pour un véhicule électrique, dans laquelle :
à condition qu'une direction de déplacement soit une direction X et une direction de largeur de véhicule soit une direction Y,
la plate-forme d'échange de batterie comprend : une unité de positionnement en direction X (1) et une unité de positionnement en direction Y (2),
l'unité de positionnement en direction X (1) est utilisée pour déterminer une position d'arrêt dans la direction X pour un véhicule entrant ;
l'unité de positionnement en direction Y (2) est utilisée pour ajuster les positions de roues avant et de roues arrière du véhicule entrant dans la direction Y afin de réaliser un positionnement dans la direction Y ;
l'unité de positionnement en direction X (1) comprend des rainures (11) pour supporter des roues, et il est déterminé que le véhicule entrant est dans la position d'arrêt dans la direction X lorsque les roues entrent dans les rainures (11) ;
l'unité de positionnement en direction Y (2) comprend une unité de positionnement en direction Y de roues avant (21) et une unité de positionnement en direction Y de roues arrière (22) respectivement configurées pour être disposées à des positions entre les roues avant et entre les roues arrière du véhicule,
l'unité de positionnement en direction Y de roues avant (21) comprend un moteur de tiges de poussée de roues avant (211) et des tiges de poussée de roues avant (212) disposées à deux extrémités du moteur de tiges de poussée de roues avant (211) dans la direction Y, le moteur de tiges de poussée de roues avant (211) est utilisé pour entraîner les tiges de poussée de roues avant (212) pour qu'elles entrent en mouvement, et les tiges de poussée de roues avant (212) sont utilisées pour pousser les roues avant pour qu'elles entrent en mouvement, afin de positionner les roues avant dans la direction Y ; et
l'unité de positionnement en direction Y de roues arrière (22) comprend un moteur de tiges de poussée de roues arrière (221) et des tiges de poussée de roues arrière (222) disposées à deux extrémités du moteur de tiges de poussée de roues arrière (221) dans la direction Y, le moteur de tiges de poussée de roues arrière (221) est utilisé pour entraîner les tiges de poussée de roues arrière (222) pour qu'elles entrent en mouvement, et les tiges de poussée de roues arrière (222) sont utilisées pour pousser les roues arrière pour qu'elles entrent en mouvement, afin de positionner les roues arrière dans la direction Y.

2. Plate-forme d'échange de batterie pour véhicule électrique selon la revendication 1, **caractérisée en ce que**
la plate-forme d'échange de batterie comprend en outre des premiers supports de rouleaux (3), dont chacun comprend une pluralité de premiers rouleaux (31) agencés côte à côte, et les premiers rouleaux (31) sont prévus dans les rainures (11) et sont utilisés pour supporter une roue entrant dans la rainure correspondante (11), les premiers rouleaux (31) étant axialement parallèles à la direction X et capables de rouler avec le mouvement dans la direction Y de la roue dans la rainure correspondante (11).

3. Plate-forme d'échange de batterie pour véhicule électrique selon la revendication 2, **caractérisée en ce que**
chacune des rainures (11) comprend une première paroi latérale de rainure (111) et une seconde paroi latérale de rainure (112) qui sont agencées dans la direction X, dans laquelle la première paroi latérale de rainure (111) et la seconde paroi latérale de rainure (112) forment un angle inclus en forme de V, et chacune des parois latérales de rainure (111 ; 112) est pourvue du premier support de rouleau (3).

4. Plate-forme d'échange de batterie pour véhicule électrique selon la revendication 1, **caractérisée en ce que**
la plate-forme d'échange de batterie comprend en outre des seconds supports de rouleaux (4), dont chacun comprend une pluralité de seconds rouleaux (41) agencés côte à côte pour supporter une roue entrant dans le second support de rouleau (4), les seconds rouleaux (41) étant axialement parallèles à la direction X et capables de rouler avec le mouvement dans la direction Y de the roue.

5. Plate-forme d'échange de batterie pour véhicule électrique selon la revendication 1, **caractérisée en ce que**
la plate-forme d'échange de batterie comprend en outre une structure de rampe (5) disposée à une extrémité ou à deux extrémités, dans la direction X, de la plate-forme d'échange de batterie et utilisée pour supporter le véhicule pour qu'il entre dans la plate-forme d'échange de batterie ou en sorte.

6. Plate-forme d'échange de batterie pour véhicule électrique selon la revendication 5, **caractérisée en ce que**
la structure de rampe (5) comprend un corps de rampe (51) et une fusée (52), et le corps de rampe (51) est relié à la plate-forme d'échange de batterie par l'intermédiaire de la fusée (52) et est tourné autour de la fusée (52) de telle sorte que la structure de rampe (5) est pliée ou déployée.

7. Plate-forme d'échange de batterie pour véhicule électrique selon la revendication 1, **caractérisée en ce que**
au moins une partie d'extrémité, dans la direction X, de la plate-forme d'échange de batterie comprend en outre des tiges guides (6) destinées à guider le véhicule pour entrer dans la plate-forme d'échange de batterie ou en sortir ; les tiges guides (6) sont disposées sur deux côtés, dans la direction Y, de la partie d'extrémité, et chacune des tiges guides (6) comprend une première partie de tige et une seconde partie de tige qui sont agencées dans la direction X et reliées l'une à l'autre, la première partie de tige étant plus près de la partie d'extrémité que la seconde partie de tige ; et
une ouverture s'agrandissant vers la partie d'extrémité est formée entre les premières parties de tiges sur deux côtés de la partie d'extrémité.

8. Plate-forme d'échange de batterie pour véhicule électrique selon la revendication 5, **caractérisée en ce que**
la plate-forme d'échange de batterie comprend en outre un rail guide (7) et une crémaillère (8) qui sont incorporés dans la plate-forme d'échange de batterie, dans laquelle le rail guide (7) est utilisé pour fournir une voie de déplacement pour un chariot d'échange de batterie pour entrer dans la plate-forme d'échange de batterie ou en sortir et déterminer une direction d'entraînement du chariot d'échange de batterie ; et
la crémaillère (8) est utilisée pour s'engrener avec une pièce d'engrenage sur le chariot d'échange de batterie pour commander la distance de mouvement du chariot d'échange de batterie.

9. Plate-forme d'échange de batterie pour véhicule électrique selon la revendication 8, **caractérisée en ce que**
le rail guide (7) et la crémaillère (8) sont tous les deux parallèles à la direction Y.

10. Plate-forme d'échange de batterie pour véhicule électrique selon la revendication 5, **caractérisée en ce que**
la plate-forme d'échange de batterie comprend en outre un module de commande, et le module de commande comprend :
une unité de commande de structure de rampe destinée à commander la structure de rampe (5) jusque dans un état plié ou un état déployé ;
une unité de commande de moteur électrique destinée à commander les états de fonctionnement du moteur de tiges de poussée de roues avant (211) et du moteur de tiges de poussée de roues arrière (221) ; et
une unité de commande de chariot d'échange de batterie destinée à commander une position d'entrée du chariot d'échange de batterie.

11. Système d'échange de batterie, comprenant la plate-forme d'échange de batterie selon l'une quelconque des revendications 1 à 10 et un chariot d'échange de batterie.
